(19) Europäisches Patentamt
European Patent Office
Office européen des brevets

(11) **EP 4 310 983 A1**

(12) **EUROPEAN PATENT APPLICATION**
published in accordance with Art. 153(4) EPC

(43) Date of publication:
**24.01.2024 Bulletin 2024/04**

(21) Application number: **22882543.6**

(22) Date of filing: **20.09.2022**

(51) International Patent Classification (IPC):
**H01M 10/42** [(2006.01)]

(52) Cooperative Patent Classification (CPC):
**H01M 10/42; H01M 50/204; H01M 50/213; H01M 50/242; H01M 50/258;** Y02E 60/10

(86) International application number:
**PCT/CN2022/119966**

(87) International publication number:
**WO 2023/065932 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.10.2021 CN 202111226418**

(71) Applicant: **Contemporary Amperex Technology Co., Limited**
**Ningde, Fujian 352100 (CN)**

(72) Inventors:
• **HE, Jianfu**
**Ningde, Fujian 352100 (CN)**

• **LIU, Qian**
**Ningde, Fujian 352100 (CN)**
• **YE, Yonghuang**
**Ningde, Fujian 352100 (CN)**
• **LI, Quanguo**
**Ningde, Fujian 352100 (CN)**
• **XU, Xiaofu**
**Ningde, Fujian 352100 (CN)**
• **JIN, Haizu**
**Ningde, Fujian 352100 (CN)**

(74) Representative: **Gong, Jinping**
**CocreateIP**
**Neumarkterstr. 21**
**81673 München (DE)**

(54) **BATTERY PACK AND ELECTRICAL APPARATUS**

(57) This application provides a battery pack and an electric apparatus. The battery pack of this application includes multiple battery cells arranged repeatedly in a unit structure, where the unit structure includes N1 first battery cells and N2 second battery cells, the N1 first battery cells surrounding the N2 second battery cells, N1 and N2 being integers greater than or equal to 1, and N1 > N2. Given that the first battery cell has a volumetric energy density denoted as D1 and a direct current impedance denoted as R1, and that the second battery cell has a volumetric energy density denoted as D2 and a direct current impedance denoted as R2, the unit structure has a thermal stability factor $\mu = (D1 \times R1)/(D2 \times R2)$ satisfying $0.2 \leq \mu \leq 1$.

FIG. 1

EP 4 310 983 A1

## Description

### PRIORITY INFORMATION

This application claims priority and interest to Patent Application No. 202111226418.0 filed with the China National Intellectual Property Administration on October 21, 2021, which is incorporated herein by reference in its entirety.

### TECHNICAL FIELD

This application relates to the field of batteries, and in particular, to a battery pack capable of suppressing thermal runaway and an electric apparatus including such battery pack.

### BACKGROUND

In recent years, with the continuous development of lithium ion and other secondary battery technologies, secondary batteries have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace.

In the foregoing fields, the capacity of a secondary battery cell sometimes cannot meet use demands, so it is necessary to connect multiple identical secondary battery cells in series or in parallel to form a battery pack.

To pursue high energy density, the secondary battery cells in the battery pack are closely arranged. As a result, when the battery pack undergoes overcharge, overdischarge, mechanical collision, and other conditions, it may cause thermal runaway of a battery cell in the battery pack. Thermal runaway of one or several battery cells in the battery pack may quickly spread to battery cells adjacent thereto, causing serious potential safety hazards. Therefore, how the safety performance of a battery pack is improved has become a key technical problem to be resolved urgently.

### SUMMARY

This application is made in view of the foregoing technical problems and intended to provide a battery pack formed by secondary batteries and capable of suppressing thermal spread and an electric apparatus including such battery pack.

To achieve the foregoing objective, a first aspect of this application provides a battery pack including multiple battery cells arranged repeatedly in a unit structure, where the unit structure includes N1 first battery cells and N2 second battery cells, the N1 first battery cells surrounding the N2 second battery cells, N1 and N2 being integers greater than or equal to 1, and N1 > N2; and given that the first battery cell has a volumetric energy density denoted as D1 and a direct current impedance denoted as R1, and that the second battery cell has a volumetric energy density denoted as D2 and a direct current impedance denoted as R2, the unit structure has a thermal stability factor $\mu = (D1 \times R1)/(D2 \times R2)$ satisfying $0.2 \leq \mu \leq 1$, and optionally satisfying $0.2 \leq \mu \leq 0.8$.

In this way, in this application, the unit structures in which the first battery cells surround the second battery cells are arranged in the battery pack, and the unit structure has the thermal stability factor $\mu = (D1 \times R1)/(D2 \times R2)$ satisfying $0.2 \leq \mu \leq 1$, and optionally satisfying $0.2 \leq \mu \leq 0.8$, which can maintain energy density and suppress thermal spread in the battery pack.

In any embodiment, given that a positive electrode plate of the first battery cell has an initial exothermic peak temperature denoted as T1 and a total heat release denoted as Q1, and that a positive electrode plate of the second battery cell has an initial exothermic peak temperature denoted as T2 and a total heat release denoted as Q2, the unit structure satisfies $1°C \leq T1 - T2 \leq 100°C$ and $0.01 \leq Q1/Q2 \leq 0.99$. In this way, the thermal spread in the battery pack can be further suppressed.

In any embodiment, given that a negative electrode plate of the first battery cell has an initial exothermic peak temperature denoted as T3 and a total heat release denoted as Q3, and that a negative electrode plate of the second battery cell has an initial exothermic peak temperature denoted as T4 and a total heat release denoted as Q4, the unit structure satisfies $1°C \leq T3 - T4 \leq 100°C$ and $0.01 \leq Q3/Q4 \leq 0.99$. In this way, the thermal spread in the battery pack can be further suppressed.

In any embodiment, given that the first battery cell has a capacity denoted as C1 and the second battery cell has a capacity denoted as C2, a ratio $\alpha$ of the capacity C2 of the second battery cell to the capacity C1 of the first battery cell satisfies $1 \leq \alpha \leq 1.5$, and optionally satisfies $1.05 \leq \alpha \leq 1.30$. In this way, the overall discharge energy of the battery pack can be increased.

In any embodiment, given that the first battery cell has an extrusion force denoted as F1 when the first battery cell deforms by 15%, the first battery cell has a radius denoted as r1, the second battery cell has an extrusion force denoted as F2 when the second battery cell deforms by 15%, the second battery cell has a radius denoted as r2, and a ratio of the radius r2 of the first battery cell to the radius r1 of the second battery cell is denoted as $\beta$, when $0.1 \leq \beta \leq 1$, a ratio $\delta$ of the extrusion force F2 of the second battery cell to the extrusion force F1 of the first battery cell satisfies $1.5 \leq \delta \leq 2$, and when $1 < \beta \leq 2$, $\delta$ satisfies $1.01 \leq \delta < 1.5$. In this way, the energy during collision can be absorbed by the first battery cell, so that the overall collision safety of the battery pack can be improved.

In any embodiment, the first battery cell and the second battery cell are lithium-ion batteries, sodium-ion batteries, or potassium-ion batteries. Thus, secondary batteries of various chemical systems can be widely used based on different requirements.

In any embodiment, N1 = 4, and N2 = 1. In this way, the second battery cell is surrounded by the first battery cells at four corners, which can further suppress thermal spread and improve collision safety.

In any embodiment, given that a difference between N1 and N2 is denoted as $\Delta N$, when $1 \leq \Delta N \leq 3$, $\beta$ satisfies $0.1 \leq \beta \leq 0.8$, and when $\Delta N > 3$, $\beta$ satisfies $0.8 < \beta \leq 2$. In this way, both safety and energy density can be guaranteed.

In any embodiment, multiple unit structures are stacked along the vertical or horizontal direction. In this way, the overall safety of the battery pack can be improved.

A second aspect of this application provides an electric apparatus, where the electric apparatus includes the battery pack according to the first aspect of this application.

Thus, the electric apparatus according to the second aspect of this application can maintain energy density and suppress thermal spread in the battery pack.

Effects of Invention

In the embodiments of this application, unit structures in which first battery cells surround second battery cells are arranged in a battery pack box, so that a battery pack capable of maintaining energy density and suppressing thermal spread and an electric apparatus including such battery pack can be provided.

## BRIEF DESCRIPTION OF DRAWINGS

FIG. 1 is a schematic exploded view of an overall structure of a battery pack according to an embodiment of this application.

FIG. 2 is a schematic structural top view of the battery pack with a box removed according to the embodiment of this application shown in FIG. 1.

FIG. 3 is a schematic exploded view of a battery cell (secondary battery) according to an embodiment of this application.

FIG. 4 is a schematic exploded view of an overall structure of a battery pack according to another embodiment of this application.

FIG. 5 is a schematic diagram of a unit structure of battery cells in a battery pack according to an embodiment of this application.

FIG. 6 is a schematic diagram of a unit structure of battery cells in a battery pack according to an embodiment of this application.

FIG. 7 is a schematic diagram of a unit structure of battery cells in a battery pack according to an embodiment of this application.

FIG. 8 is a schematic diagram of a unit structure of battery cells in a battery pack according to an embodiment of this application.

FIG. 9 is a schematic diagram of an electric apparatus using a battery pack as a power source according to an embodiment of this application.

Description of reference signs:

1. battery pack; 20. battery box; 21. upper box body; 22. lower box body; 10. unit structure; 11. first battery cell; 12. second battery cell; 31. housing; 32. end cover; and 33. electrode assembly.

## DESCRIPTION OF EMBODIMENTS

The following specifically discloses embodiments of a battery pack and an electric apparatus in this application with appropriate reference to detailed descriptions of accompanying drawings. However, there may be cases where unnecessary detailed descriptions are omitted. For example, detailed descriptions of a well-known matter and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, for example, in the order described. For example, a method including steps (a) and (b) indicates that the method may include steps (a) and (b) performed in order or may include steps (b) and (a) performed in order. For example, that the method may further include step (c) indicates that step (c) may be added to the method in any order. For example, the method may include steps (a), (b), and (c), or steps (a), (c), and (b), or steps (c), (a), and (b), or the like.

Unless otherwise specified, "include" and "contain" mentioned in this application is inclusive or may be exclusive. For example, the terms "include" and "contain" can mean that other unlisted components may also be included or contained, or only listed components may be included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The inventors of this application have noted that in a battery pack constituted by secondary battery cells, as identical secondary battery cells are closely arranged, when the battery pack undergoes overcharge, overdischarge, mechanical abuse, thermal abuse, and other conditions, thermal runaway of a battery cell in the battery pack may be caused. Thermal runaway of one or several battery cells in the battery pack may quickly spread to battery cells adjacent thereto, causing serious potential safety hazards.

Therefore, the inventors of this application have designed a unit structure of battery cells. In this unit structure, first battery cells surround second battery cells, and a thermal stability factor $\mu = (D1 \times R1)/(D2 \times R2)$ of this unit structure satisfies a specified range, thus suppressing thermal spread in the battery pack.

Battery pack

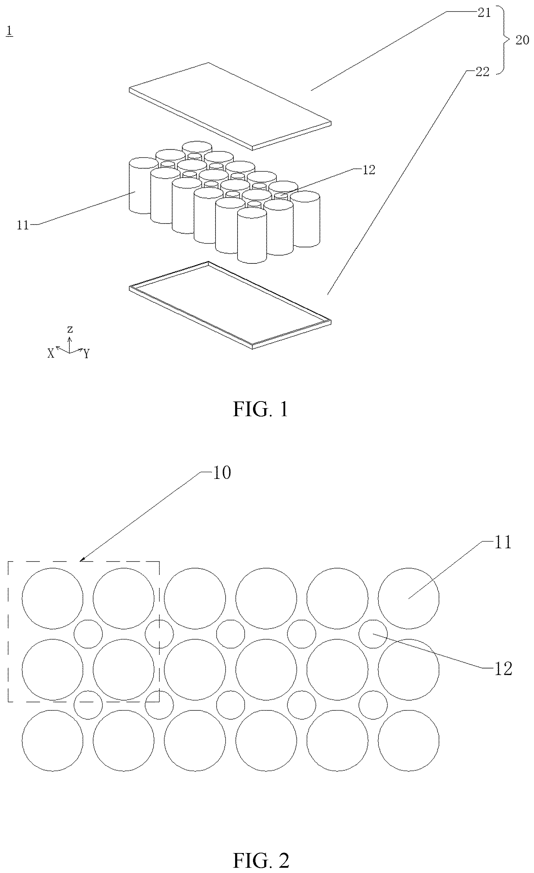

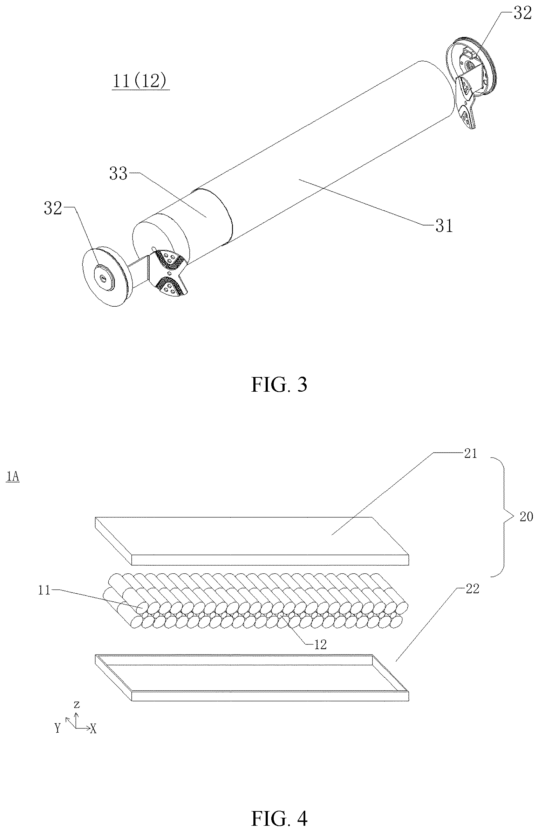

FIG. 1 is a schematic exploded view of an overall structure of a battery pack according to an embodiment of this application. FIG. 2 is a schematic structural top view of the battery pack with a box removed according to the embodiment of this application shown in FIG. 1. FIG. 3 is a schematic exploded view of a battery cell (secondary battery) according to an embodiment of this application.

For a battery pack 1 of this application, as shown in FIG. 1, the battery pack 1 may include a battery box 20 and multiple battery cells 11, 12 arranged in the battery box 20. The battery box 20 includes an upper box body 21 and a lower box body 22. The upper box body 21 can cover the lower box body 22 to form an enclosed space for accommodating the battery cells 11, 12.

In an embodiment of this application, as shown in FIG. 1, the battery pack 1 includes multiple battery cells 11, 12 arranged repeatedly in a unit structure 10, where the unit structure 10 includes N1 first battery cells 11 and N2 second battery cells 12, the N1 first battery cells 11 surrounding the N2 second battery cells 12, N1 and N2 being integers greater than or equal to 1, and N1 > N2. Given that the first battery cell 11 has a volumetric energy density denoted as D1 and a direct current impedance denoted as R1, and that the second battery cell 12 has a volumetric energy density denoted as D2 and a direct current impedance denoted as R2, the unit structure 10 has a thermal stability factor $\mu$ = (D1 $\times$ R1)/(D2 $\times$ R2) satisfying $0.2 \leq \mu \leq 1$.

In this application, the volumetric energy density of the battery cell is determined in the following method.

D: Battery cell initial discharge capacity $\times$ discharge voltage plateau/battery cell volume.

The battery cell initial discharge capacity is defined as a capacity of each battery cell being discharged at 0.33C at 25°C from its cut-off upper limit voltage to its cut-off lower limit voltage.

The discharge voltage plateau is defined as an average discharge voltage of each battery cell being discharged at 0.33C at 25°C from its cut-off upper limit voltage to its cut-off lower limit voltage.

In this application, the direct current resistance of the battery cell is determined in the following method.

R: Direct current impedance

An EIS impedance tester is used to test direct current impedance of a battery cell after the battery cell has been discharged for 30s at a constant rate at 25°C in a 50% SOC state.

Although the mechanism is not clear, the inventors of this application have fortuitously found that in this application, the unit structures in which the first battery cells surround the second battery cells are arranged in the battery pack, and the unit structure has a thermal stability factor $\mu$ = (D1 $\times$ R1)/(D2 $\times$ R2) satisfying $0.2 \leq \mu \leq 1$, thus suppressing thermal spread in the battery pack. The inventors of this application have speculated that a resistance R affects heat produced and a heat production speed of a battery when an internal short circuit occurs. Because positive and negative electrodes of a cell are short circuited when thermal runaway or collision occurs, a larger resistance R leads to fast heat production and much heat produced, while a smaller resistance R leads to slow heat production and little heat produced. D affects thermal runaway severity and thermal radiation to surrounding batteries when a battery undergoes thermal runaway. If D is small, even if the cell undergoes thermal runaway, the overall thermal runaway severity is small, so less heat is transferred to the surrounding batteries, reducing the probability of triggering thermal spread. Therefore, controlling (D1 $\times$ R1)/(D2 $\times$ R2) within an appropriate range can suppress thermal spread.

As shown in FIG. 1, the first battery cells 11 and the second battery cells 12 are vertically disposed in the box. To be specific, the unit structures 10 are arranged along direction X and direction Y, and multiple unit structures can be stacked along direction Z. This application does not impose any special limitations on a shape of the secondary battery, and the secondary battery may be cylindrical, rectangular, or of any other shapes. FIG. 3 is a schematic exploded view of a battery cell (secondary battery) according to an embodiment of this application. FIG. 3 shows a cylindrical secondary battery as an example. The battery cell 11, 12 may include a housing 31, an end cover 32, and one or more electrode assemblies 33 disposed in the housing 31. The housing 31 may be a hollow cylinder, and the housing 31 has an opening such that one or more electrode assemblies 33 can be placed inside the housing 31. An end face of the housing 31 is an opening face, which means that the end face has no wall so that the inside and the outside of the housing 31 are communicated. The end cover 32 covers the opening and is connected to the housing 31 to form an enclosed cavity for accommodating the electrode assembly 33. A positive electrode plate, a negative electrode plate, and a separator may be made into the electrode assembly 33 through winding or lamination. The electrode assembly 33 is packaged in the cavity. The housing 31 is filled with an electrolyte such as a liquid electrolyte.

Based on different power demands, the unit structures 10 may be provided in any quantity, which means that the battery cells 11, 12 may be provided in any quantity. Multiple battery cells 11, 12 may be connected in series, in parallel, or in series-parallel to achieve greater capacity or power.

In some embodiments, given that a positive electrode plate of the first battery cell has an initial exothermic peak temperature denoted as T1 and a total heat release denoted as Q1, and that a positive electrode plate of the second battery cell has an initial exothermic peak temperature denoted as T2 and a total heat release denoted as Q2, the unit structure satisfies $1°C \leq T1 - T2 \leq 100°C$ and $0.01 \leq Q1/Q2 \leq 0.99$.

In this application, the initial exothermic peak temperature T of the battery cell is determined in the following method.

A DSC analyzer is used to perform DSC test for an electrode plate, where the electrode plate is a positive electrode plate or a negative electrode plate removed from a fully charged battery cell, an initial test temperature is 35°C, an end test temperature is 500°C, and a temperature rise rate is 10°C/min. The initial exothermic peak temperature T is determined by reading a temperature corresponding to an initial exothermic peak in a DSC curve. The total heat release is calculated through the DSC curve area integration. To be specific, a reaction area in a range of 35°C to 500°C is taken, and an integral area is calculated using an equipment automatic system (NETZSCH STA449F3 differential scanning calorimeter DSC).

The initial exothermic peak T represents an initial temperature at which the electrode plate begins to react. A higher temperature indicates that the material does not react when a temperature is lower than this temperature and only starts to react when a temperature is higher than this temperature, meaning that a higher initial exothermic peak temperature leads to better thermal stability and higher safety of the material. The total heat release Q represents energy released in the whole reaction process. Lower energy released indicates less energy contained in the material, less heat transferred to the outside after thermal runaway occurs, better thermal stability, and higher safety. The unit structure satisfying the foregoing range can further suppress thermal runaway spread.

In some embodiments, given that a negative electrode plate of the first battery cell has an initial exothermic peak temperature denoted as T3 and a total heat release denoted as Q3, and that a negative electrode plate of the second battery cell has an initial exothermic peak temperature denoted as T4 and a total heat release denoted as Q4, the unit structure satisfies $1°C \leq T3 - T4 \leq 100°C$ and $0.01 \leq Q3/Q4 \leq 0.99$. In this way, the thermal spread in the battery pack can be further suppressed.

In some embodiments, given that the first battery cell has a capacity denoted as C1 and the second battery cell has a capacity denoted as C2, a ratio $\alpha$ of the capacity C2 of the second battery cell to the capacity C1 of the first battery cell satisfies $1 \leq \alpha \leq 1.5$, and optionally satisfies $1.05 \leq \alpha \leq 1.30$. A battery pack system works according to the cask effect, meaning that one battery cell with the lowest energy released in the battery pack determines discharge energy of all other battery cells. Therefore, the capacity of the second battery cell should not be lower than the capacity of the first battery cell. This can increase the overall discharge energy of the battery pack. However, an excessively high capacity of the second battery cell is accompanied with excessive surplus energy in the second battery cell, which is not conducive to increasing the overall discharge energy of the battery pack.

In some embodiments, given that the first battery cell has an extrusion force denoted as F1 when the first battery cell deforms by 15%, the first battery cell has a radius denoted as r1, the second battery cell has an extrusion force denoted as F2 when the second battery cell deforms by 15%, the second battery cell has a radius denoted as r2, and a ratio of the radius r2 of the first battery cell to the radius r1 of the second battery cell is denoted as $\beta$, when $0.1 \leq \beta \leq 1$, a ratio $\delta$ of the extrusion force F2 of the second battery cell to the extrusion force F1 of the first battery cell satisfies $1.5 \leq \delta \leq 2$, and when $1 < \beta \leq 2$, $\delta$ satisfies $1.01 \leq \delta < 1.5$.

In this application, the extrusion force F of the battery cell is determined in the following method.

The extrusion force when the battery cell deforms by 15% is recorded in accordance with the test method defined in GB38031-2020 Electric Vehicles Traction Battery Safety Requirements.

A smaller extrusion force leads to larger deformation during collision, so that more collision energy can be absorbed. The first battery cell has high safety and is less prone to failure, so the collision energy is absorbed by the first battery cell as much as possible and less transferred to the second battery cell with low safety performance, thus achieving high safety during collision. When the first battery cell has a large radius, the extrusion force of the second battery cell can be appropriately reduced, and the first battery cell can absorb more energy, so the strength of the housing of the second battery cell can be degraded to reduce the cost. When the first battery cell has a small radius, the first battery cell can absorb less energy, so the extrusion force of the second battery is as large as possible to improve safety. In this way, the energy during collision can be absorbed by the first battery cell, so that the overall collision safety of the battery pack can be improved.

In some embodiments, the first battery cell and the second battery cell are lithium-ion batteries, sodium-ion batteries, or potassium-ion batteries. Thus, secondary batteries of various chemical systems can be widely used based on different requirements.

In some embodiments, multiple unit structures are stacked along the vertical or horizontal direction. In this way, the overall safety of the battery pack can be improved. FIG. 4 is a schematic exploded view of an overall structure of a battery pack 1A according to another embodiment of this application. As shown in FIG. 4, first battery cells 11 and second battery cells 12 are horizontally disposed in a box. That is, unit structures 10 are arranged along direction X and direction Z, and multiple unit structures are stacked along direction Y.

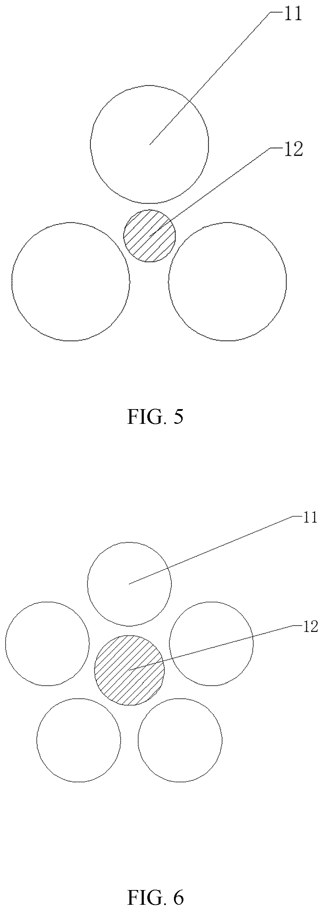

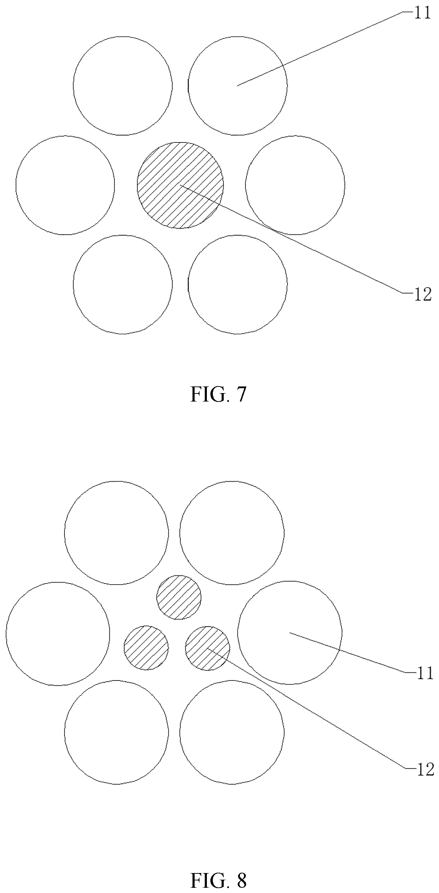

In some embodiments, as shown in FIG. 1 and FIG. 2, four first battery cells surround one second battery cell. That is, N1 = 4, and N2 = 1. In this way, the second battery cell is surrounded by the first battery cells at four corners, which can further suppress thermal spread and improve collision safety. However, the first battery cells and the second battery cells may be provided in an appropriately changeable quantity. As shown in FIG. 5, three first battery cells may surround one second battery cell. As shown in FIG. 6, five first battery cells may surround one second battery cell. As shown in FIG. 7, six first battery cells may surround one second battery cell. As shown in FIG. 8, six first battery cells may alternatively surround three second battery cells.

In some embodiments, given that a difference between N1 and N2 is denoted as $\Delta N$, when $1 \leq \Delta N \leq 3$, $\beta$ satisfies $0.1 \leq \beta \leq 0.8$, and when $\Delta N > 3$, $\beta$ satisfies $0.8 < \beta \leq 2$. In this way, both safety and energy density can be guaranteed.

When the value of $\Delta N$ is small, for example, 1 to 3, the first battery cells have a poor surrounding effect on the second battery cells, the radius of the second battery cell needs to be controlled to be small enough as compared with the first battery, so that a better protection effect can be achieved. When the value of $\Delta N$ is large, for example, more than 3, the first battery cells have a good surrounding effect on the second battery cells (meaning that the second battery cell is surrounded by the first battery cells at four corners), in this case, the radius of the second battery cell may be larger to achieve higher energy density or to collocate with a wider range of chemical systems.

In addition, the following describes a secondary battery, a battery pack, and an electric apparatus in this application with appropriate reference to the accompanying drawings.

An embodiment of this application provides a secondary battery.

Typically, the secondary battery includes a positive electrode plate, a negative electrode plate, an electrolyte, and a separator. In a charge and discharge process of the battery, active ions intercalate and deintercalate between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

[Positive electrode plate]

The positive electrode plate includes a positive electrode current collector and a positive electrode film layer disposed on at least one surface of the positive electrode current collector, where the positive electrode film layer includes the positive electrode active material according to the first aspect of this application.

For example, the positive electrode current collector includes two opposite surfaces in its thickness direction, and the positive electrode film layer is disposed on either or both of the two opposite surfaces of the positive electrode current collector.

In some embodiments, the positive electrode current collector may use a metal foil current collector or a composite current collector. For example, aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for a battery in the art. For example, the positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode film layer may further optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: The foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

[Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer may further optionally include a binder. The binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer may further optionally include other promoters such as a thickener (for example, sodium carboxymethyl cellulose (CMC-Na)).

In some embodiments, the negative electrode plate may be prepared in the following manner: The constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

[Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bistrifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive, a positive electrode film-forming additive, or may further include an additive capable of improving some performance of the battery, for example, an additive for improving overcharge performance of the battery or an additive for improving high-temperature performance or low-temperature performance of the battery.

[Separator]

In some embodiments, the secondary battery further includes a separator. The separator is not limited to any specific type in this application, and may be any commonly known porous separator with high chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package can be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

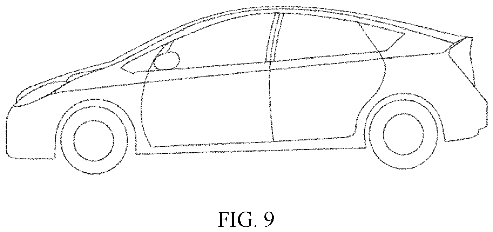

FIG. 9 shows an electric apparatus as an example. The electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

(I) Preparation of battery cell

I Preparation of first battery cell

[Preparation Example I-1]

(1) Preparation of positive electrode plate

A first positive electrode active substance $LiNi_{0.5}Co_{0.2}Mn_{0.3}O_2$ as a positive electrode active substance, a conductive agent superconducting carbon black SP, and a binder polyvinylidene fluoride (PVDF) were dispersed in a solvent N-methylpyrrolidone (NMP) and mixed to uniformity to obtain a positive electrode slurry. The positive electrode slurry was evenly applied onto a positive electrode current collector aluminum foil, followed by drying, cold pressing, slitting, and cutting to obtain a positive electrode plate.

A mass ratio of the positive electrode active substance, the conductive carbon black, and the binder PVDF was 96:2:2. The positive electrode active substance had a coating weight per unit area of 0.25 g/1540.25 $mm^2$.

(2) Preparation of negative electrode plate

A negative electrode active material graphite, a conductive agent superconducting carbon black SP, a binder SBR, and a thickener CMC-Na were dispersed in a solvent deionized water at a mass ratio of 96:1:1:2 and mixed to uniformity to obtain a negative electrode slurry. The negative electrode slurry was evenly applied onto a negative electrode current collector copper foil, followed by drying, cold pressing, slitting, and cutting to obtain a negative electrode plate.

(3) Separator

A polyethylene film was used as a separator.

(4) Preparation of electrolyte

Ethylene carbonate (EC), dimethyl carbonate (DMC), and diethyl carbonate (DEC) were mixed to uniformity at a volume ratio of 1:1:1 to obtain an organic solvent, and then a fully dried lithium salt $LiPF_6$ was dissolved in the mixed organic solvent to prepare an electrolyte with a concentration of 1 mol/L.

(5) Preparation of battery cell

The positive electrode plate, the separator, and the negative electrode plate were sequentially stacked so that the separator was sandwiched between the positive electrode plate and the negative electrode plate for separation. Then the resulting stack was wound to obtain a bare cell. The bare cell was placed into an outer package shell and dried. Then the electrolyte was injected, and processes such as vacuum packaging, standing, formation, and shaping were performed to obtain a first battery cell 1-1. The first battery cell 1-1 had a radius of 32 mm.

[Preparation Example I-2]

A first battery cell I-2 was obtained in the same manner as in Preparation Example I-1, except that $LiNi_{0.8}Co_{0.1}Mn_{0.1}O_2$ was used as a positive electrode active substance.

[Preparation example I-3]

A first battery cell I-3 was obtained in the same manner as in Preparation Example I-1, except that a first positive electrode active substance $Li_2MnO_3$ and a second positive electrode active substance $LiNi_{0.255}Co_{0.255}Mn_{0.439}O_2$ were used as a positive electrode active substance, that a mass ratio of the second positive electrode active substance $LiNi_{0.255}Co_{0.255}Mn_{0.439}O_2$ to the first positive electrode active substance $Li_2MnO_3$ was 65.0:35.0, and that the positive electrode active substance had a coating weight per unit area of 0.30 g/1540.25 $mm^2$.

[Preparation Example I-4]

A first battery cell I-4 was obtained in the same manner as in Preparation Example I-1, except that $LiFePO_4$ was used as a positive electrode active substance, and that the positive electrode active substance had a coating weight per unit area of 0.35 g/1540.25 $mm^2$.

[Preparation Example I-5]

A first battery cell I-5 was obtained in the same manner as in Preparation Example I-1, except that $Na_3V_2(PO_4)_3$ was used as a positive electrode active substance and conductive carbon CNT was used as a conductive agent, that a mass ratio of the positive electrode active substance, the conductive carbon CNT, and a binder PVDF was 97:1:2, that the positive electrode active substance had a coating weight per unit area of 0.45 g/1540.25 $mm^2$, that hard carbon was used as a negative electrode active substance, and that $NaPF_6$ was used in an electrolyte.

[Preparation Example I-6]

A first battery cell I-6 was obtained in the same manner as in Preparation Example I-5, except that the positive electrode active substance had a coating weight per unit area of 0.20 g/1540.25 $mm^2$.

[Preparation Example II-1]

(1) Preparation of positive electrode plate

A positive electrode active substance $LiNi_{0.8}Co_{0.1}Mn_{0.1}O_2$, a conductive agent superconducting carbon black SP, and a binder polyvinylidene fluoride (PVDF) were dispersed in a solvent N-methylpyrrolidone (NMP) and mixed to uniformity to obtain a positive electrode slurry. The positive electrode slurry was evenly applied onto a positive electrode current collector aluminum foil, followed by drying, cold pressing, slitting, and cutting to obtain a positive electrode plate.
A mass ratio of the positive electrode active substance, the conductive carbon black, and the binder PVDF was 96.5:1.5:2. The positive electrode active substance had a coating weight per unit area of 0.30 g/1540.25 mm$^2$.

(2) Preparation of negative electrode plate

A negative electrode active material graphite, a conductive agent superconducting carbon black SP, a binder SBR, and a thickener CMC-Na were dispersed in a solvent deionized water at a mass ratio of 96:1:1:2 and mixed to uniformity to obtain a negative electrode slurry. The negative electrode slurry was evenly applied onto a negative electrode current collector copper foil, followed by drying, cold pressing, slitting, and cutting to obtain a negative electrode plate.

(3) Separator

A polyethylene film was used as a separator.

(4) Preparation of electrolyte

Ethylene carbonate (EC), dimethyl carbonate (DMC), and diethyl carbonate (DEC) were mixed to uniformity at a volume ratio of 1:1:1 to obtain an organic solvent, and then a fully dried lithium salt $LiPF_6$ was dissolved in the mixed organic solvent to prepare an electrolyte with a concentration of 1 mol/L.

(5) Preparation of battery cell

The positive electrode plate, the separator, and the negative electrode plate were sequentially stacked so that the separator was sandwiched between the positive electrode plate and the negative electrode plate for separation. Then the resulting stack was wound to obtain a bare cell. The bare cell was placed into an outer package shell and dried. Then the electrolyte was injected, and processes such as vacuum packaging, standing, formation, and shaping were performed to obtain a second battery cell II-1. The second battery cell II-1 had a radius of 30 mm.

[Preparation Example II-2]

A second battery cell I-2 was obtained in the same manner as in Preparation Example II-1, except that a positive electrode active substance had a coating weight per unit area of 0.35 g/1540.25 mm$^2$.

[Preparation Example II-3]

A second battery cell II-3 was obtained in the same manner as in Preparation Example II-1, except that a first positive electrode active substance $Li_2MnO_3$ and a second positive electrode active substance $LiNi_{0.255}Co_{0.255}Mn_{0.439}O_2$ were used as a positive electrode active substance, that a mass ratio of the second positive electrode active substance $LiNi_{0.255}Co_{0.255}Mn_{0.439}O_2$ to the first positive electrode active substance $Li_2MnO_3$ was 65.0:35.0, and that the positive electrode active substance had a coating weight per unit area of 0.28 g/1540.25 mm$^2$.

[Preparation Example II-4]

A second battery cell II-4 was obtained in the same manner as in Preparation Example II-3, except that strength of a housing (an extrusion force when the housing deforms by 15%) was reduced to 100 N.

[Preparation Example II-5]

A second battery cell II-5 was obtained in the same manner as in Preparation Example II-2, except that the battery cell had a radius of 36mm, and that strength of a housing (an extrusion force when the housing deforms by 15%) was reduced to 150 N.

[Preparation Example II-6]

A second battery cell II-6 was obtained in the same manner as in Preparation Example II-3, except that a positive electrode active substance had a coating weight per unit area of 0.33 g/1540.25 mm$^2$, that the battery cell had a radius of 36 mm, and that strength of a housing (an extrusion force when the housing deforms by 15%) was reduced to 150 N.

[Preparation Example II-7]

A second battery cell II-7 was obtained in the same manner as in Preparation Example II-1, except that a positive electrode active substance had a coating weight per unit area of 0.32 g/1540.25 mm$^2$, and that the battery cell had a radius of 24 mm.

(II) Assembly of battery pack

[Example 1]

A unit structure was formed by four first battery cells I-1 and one second battery cell II-1, and unit structures were arranged along a length direction and a width direction and assembled into a battery pack.

[Example 2]

A battery pack was assembled in the same manner as in example 1, except that a first battery cell I-1 was replaced with a first battery cell I-4.

[Example 3]

A battery pack was assembled in the same manner as in example 1, except that a first battery cell I-1 was replaced with a first battery cell I-5.

[Example 4]

A battery pack was assembled in the same manner as in example 1, except that a second battery cell II-1 was replaced with a second battery cell II-3.

[Example 5]

A battery pack was assembled in the same manner as in example 4, except that a first battery cell I-1 was replaced with a first battery cell I-4.

[Example 6]

A battery pack was assembled in the same manner as in example 4, except that a first battery cell I-1 was replaced with a first battery cell I-5.

[Example 7]

A battery pack was assembled in the same manner as in example 1, except that a second battery cell II-1 was replaced with a second battery cell II-5.

[Example 8]

A battery pack was assembled in the same manner as in example 1, except that a second battery cell II-1 was replaced with a second battery cell II-6.

[Comparative example 1]

A battery pack was assembled in the same manner as in example 1, except that a first battery cell I-1 was replaced with a first battery cell I-2.

[Comparative example 2]

A battery pack was assembled in the same manner as in example 1, except that a first battery cell I-1 was replaced with a first battery cell I-3.

[Comparative example 3]

A battery pack was assembled in the same manner as in example 1, except that a first battery cell I-1 was replaced with a first battery cell I-6, and that a second battery cell II-1 was replaced with a second battery cell II-2.

[Comparative example 4]

A battery pack was assembled in the same manner as in example 1, except that a first battery cell I-1 was replaced with a first battery cell I-6, and that a second battery cell II-1 was replaced with a second battery cell II-4.

[Comparative example 5]

A battery pack was assembled in the same manner as in example 1, except that a second battery cell II-1 was replaced with a second battery cell II-4.

[Example 9]

A unit structure was constituted by six first battery cells I-1 and one second battery cell II-1, and unit structures were arranged along a length direction and a width direction and assembled into a battery pack.

[Examples 10 to 17]

Types and quantities of first battery cells and second battery cells used in Examples 10 to 17 were shown in Table 8. Battery packs were assembled in the same manner as in Example 9.

(III) Performance test results of battery cell and battery pack

1. Performance test results of battery cell

The foregoing method was used to measure various performance parameters of the first battery cells I-1 to I-6, and measurement and calculation results of all battery cells and compositions of positive and negative electrodes were shown in Table 1 and Table 2.

**Table 1 Compositions of positive and negative electrodes and coating parameters of first battery cell**

| First battery cell | Positive electrode active substance | Negative electrode active substance | Conductive agent | Percentage of conductive agent | Coating weight per unit area (g/1540.25 mm$^2$) | Radius r1 (mm) |
|---|---|---|---|---|---|---|
| I-1 | $LiNi_{0.5}Co_{0.2}Mn_{0.3}O_2$ | Graphite | Conductive carbon SP | 2.0% | 0.25 | 32 |
| I-2 | $LiNi_{0.8}Co_{0.1}Mn_{0.1}O_2$ | Graphite | Conductive carbon SP | 2.0% | 0.25 | 32 |
| I-3 | $0.35Li_2MnO_3$ and $0.65LiNi_{0.255}Co_{0.255}Mn_{0.439}O_2$ | Graphite | Conductive carbon SP | 2.0% | 0.30 | 32 |
| I-4 | $LiFePO_4$ | Graphite | Conductive carbon SP | 2.0% | 0.35 | 32 |
| I-5 | $Na_3V_2(PO_4)_3$ | Hard carbon | Conductive carbon CNT | 1.0% | 0.45 | 32 |
| I-6 | $Na_3V_2(PO_4)_3$ | Hard carbon | Conductive carbon CNT | 1.0% | 0.20 | 32 |

**Table 2 Performance parameters of first battery cell**

| First battery cell | Capacity C1 (Ah) | Volumetric energy density D1 (Wh/L) | Direct current resistance R1 (mΩ) | Initial exothermic peak temperature T1 of positive electrode plate (°C) | Total heat release Q1 of positive electrode plate (J) | Initial exothermic peak temperature T3 of negative electrode plate (°C) | Total heat release Q3 of negative electrode plate (J) | Extrusion force F1 when first battery cell deforms by 15% (N) |
|---|---|---|---|---|---|---|---|---|
| I-1 | 112 | 500 | 0.86 | 230 | 1300 | 230 | 1700 | 130 |
| I-2 | 130 | 560 | 1.10 | 210 | 1800 | 228 | 1800 | 130 |
| I-3 | 135 | 560 | 1.05 | 240 | 1400 | 238 | 1650 | 130 |
| I-4 | 93 | 320 | 1.10 | 290 | 500 | 240 | 1630 | 130 |
| I-5 | 110 | 400 | 0.65 | 280 | 500 | 230 | 1700 | 130 |
| I-6 | 40 | 150 | 0.85 | 285 | 490 | 235 | 1600 | 130 |

In addition, the second battery cells II-1 to II-7 were also measured and calculated, and measurement and calculation results of these battery cells and compositions of positive and negative electrodes were shown in Table 3 and Table 4.

**Table 3 Compositions of positive and negative electrodes and coating parameters of second battery cell**

| Second battery cell | Positive electrode active substance | Negative electrode active substance | Conductive agent | Percentage of conductive agent | Coating weight per unit area (g/1540.25 mm2) | Radius r2 (mm) |
|---|---|---|---|---|---|---|
| II-1 | $LiNi0.8Co0.1Mn0.1O2$ | Graphite | Conductive carbon SP | 1.50% | 0.30 | 30 |
| II-2 | $LiNi0.8Co0.1Mn0.1O2$ | Graphite | Conductive carbon SP | 1.50% | 0.35 | 30 |
| II-3 | $0.35Li2MnO3$ and $0.65LiNi0.255Co0.255Mn0.439O2$ | Graphite | Conductive carbon SP | 1.50% | 0.28 | 30 |
| II-4 | $0.35Li2MnO3$ and $0.65LiNi0.255Co0.255Mn0.439O2$ | Graphite | Conductive carbon SP | 1.50% | 0.28 | 30 |
| II-5 | $LiNi0.8Co0.1Mn0.1O2$ | Graphite | Conductive carbon SP | 1.50% | 0.35 | 36 |
| II-6 | $0.35Li2MnO3$ and $0.65LiNi0.255Co0.255Mn0.439O2$ | Graphite | Conductive carbon SP | 1.50% | 0.33 | 36 |
| II-7 | $LiNi0.8Co0.1Mn0.1O2$ | Graphite | Conductive carbon SP | 1.50% | 0.32 | 24 |

**Table 4 Performance parameters of second battery cell**

| Second battery cell | Capacity C2 (Ah) | Volumetric energy density D1 (Wh/L) | Direct current resistance R1 (mΩ) | Initial exothermic peak temperature T2 of positive electrode plate (°C) | Total heat release Q2 of positive electrode plate (J) | Initial exothermic peak temperature T4 of negative electrode plate (°C) | Total heat release Q4 of negative electrode plate (J) | Extrusion force F2 when second battery cell deforms by 15% (N) |
|---|---|---|---|---|---|---|---|---|
| II-1 | 120 | 550 | 1.00 | 210 | 1800 | 220 | 1800 | 200 |
| II-2 | 135 | 600 | 1.40 | 205 | 1850 | 215 | 1850 | 200 |
| II-3 | 120 | 550 | 1.35 | 210 | 1800 | 220 | 1800 | 200 |
| II-4 | 120 | 550 | 1.38 | 210 | 1800 | 220 | 1800 | 100 |
| II-5 | 145 | 520 | 1.00 | 210 | 1700 | 215 | 1800 | 150 |
| II-6 | 146 | 535 | 1.45 | 215 | 1750 | 225 | 1750 | 150 |
| II-7 | 80 | 600 | 0.95 | 205 | 1830 | 218 | 1820 | 200 |

2. Performance test results of battery pack

(1) Thermal runaway evaluation

Thermal runaway evaluation was performed on battery packs of Examples 1 to 8 and Comparative Examples 1 to 4.

Thermal runaway evaluation was performed by the following steps:

(1) Thermal runaway evaluation was performed in accordance with GB38031-2020 Electric Vehicles Traction Battery Safety Requirements. (2) Extrusion in direction X: an extrusion speed was not higher than 2 mm/s; and extrusion was performed until the overall size in the extrusion direction deformed by 30% and maintained for 10 min. (3) A temperature sensing wire was arranged at a pole terminal of a second battery cell to record temperature rise of the second battery cell during the test. (4) Whether the first and second battery cells had undergone thermal runaway was determined through visual inspection.

The calculation logic of capacity surplus of the second battery cell was as follows:

$$(\text{second battery cell capacity C2} - \text{first battery cell capacity C1})/\text{second battery cell capacity C2}.$$

A capacity test method was as follows: Battery cell initial discharge capacity was defined as a capacity if each battery cell being discharged at 0.33C at 25°C from its cut-off upper limit voltage to its cut-off lower limit voltage.

**Table 5 Compositions and performance parameters of battery packs of Examples 1 to 8 and Comparative Examples 1 to 4**

| Battery pack | First battery cell | Second battery cell | μ (D1 × R1)/(D2 × R2) | Whether thermal spread occurs (thermal runaway of second cell in central region is triggered) | Second battery cell peak temperature rise | Second battery cell capacity surplus |
|---|---|---|---|---|---|---|
| Example 1 | I-1 | II-1 | 0.78 | No | 100°C | 7% |
| Example 2 | I-4 | II-1 | 0.64 | No | 70°C | 23% |
| Example 3 | I-5 | II-1 | 0.47 | No | 50°C | 8% |
| Example 4 | I-1 | II-3 | 0.58 | No | 85°C | 7% |
| Example 5 | I-4 | II-3 | 0.47 | No | 58°C | 23% |
| Example 6 | I-5 | II-3 | 0.35 | No | 45°C | 8% |
| Example 7 | I-1 | II-5 | 0.83 | No | 105°C | 23% |
| Example 8 | I-1 | II-6 | 0.55 | No | 87°C | 23% |
| Comparative example 1 | I-2 | II-1 | 1.12 | Yes | Higher than 500°C | 7% |
| Comparative example 2 | I-3 | II-1 | 1.07 | Yes | Higher than 500°C | −13% |
| Comparative example 3 | I-6 | II-2 | 0.15 | No | 35°C | 70% |
| Comparative example 4 | I-6 | II-4 | 0.17 | No | 35°C | 67% |

### Table 6 Compositions and performance parameters of battery packs of Examples 1 to 8 and Comparative Examples 1 to 4

| Battery pack | First battery cell | Second battery cell | T1 – T2 | Q1/Q2 | T3 – T4 | Q3/Q4 | C2/C1 | Whether thermal spread occurs (thermal runaway of second cell in central region is triggered) | Second battery cell peak temperature rise | Second battery cell capacity surplus |
|---|---|---|---|---|---|---|---|---|---|---|
| Example 1 | I-1 | II-1 | 20 | 0.72 | 10 | 0.94 | 1.07 | No | 100°C | 7% |
| Example 2 | I-4 | II-1 | 80 | 0.28 | 20 | 0.91 | 1.29 | No | 70°C | 23% |
| Example 3 | I-5 | II-1 | 70 | 0.28 | 10 | 0.94 | 1.09 | No | 50°C | 8% |
| Example 4 | I-1 | II-3 | 20 | 0.72 | 10 | 0.94 | 1.07 | No | 85°C | 7% |
| Example 5 | I-4 | II-3 | 80 | 0.28 | 10 | 0.91 | 1.29 | No | 58°C | 23% |
| Example 6 | I-5 | II-3 | 70 | 0.28 | 10 | 0.94 | 1.09 | No | 45°C | 8% |
| Example 7 | I-1 | II-5 | 20 | 0.76 | 15 | 0.89 | 1.29 | No | 105°C | 23% |
| Example 8 | I-1 | II-6 | 15 | 0.74 | 5 | 0.97 | 1.30 | No | 87°C | 23% |
| Comparative example 1 | I-2 | II-1 | 0 | 1.00 | 8 | 1.00 | 0.92 | Yes | Higher than 500°C | 7% |
| Comparative example 2 | I-3 | II-1 | 30 | 0.78 | 18 | 1.03 | 0.89 | Yes | Higher than 500°C | −13% |
| Comparative example 3 | I-6 | II-2 | 80 | 0.26 | 20 | 0.86 | 3.37 | No | 35°C | 70% |
| Comparative example 4 | I-6 | II-4 | 75 | 0.27 | 15 | 0.89 | 3 | No | 35°C | 67% |

(2) Collision evaluation

Collision evaluation was performed on battery packs of examples 1 to 8 and comparative example 5, and evaluation results were shown in Table 7.

In addition, collision evaluation was performed on battery packs of examples 9 to 17, and evaluation results were shown in Table 8.

Collision evaluation steps were as follows:

Simulated collision experiment of the battery pack was performed in accordance with GB38031-2020 Electric Vehicles Traction Battery Safety Requirements.

**Table 7 Performance parameters and collision evaluation results of battery packs of Examples 1 to 8 and Comparative Example 5**

| Battery pack | First battery cell | Second battery cell | $\beta$ $r2/r1$ | $\mu$ $(D1 \times R1)/(D2 \times R2)$ | $\delta$ $F2/F1$ | Collision evaluation Whether second battery cell has depression or electrolyte leakage |
|---|---|---|---|---|---|---|
| Example 1 | I-1 | II-1 | 0.94 | 0.78 | 1.54 | No |
| Example 2 | I-4 | II-1 | 0.94 | 0.64 | 1.54 | No |
| Example 3 | I-5 | II-1 | 0.94 | 0.47 | 1.54 | No |
| Example 4 | I-1 | II-3 | 0.94 | 0.58 | 1.54 | No |
| Example 5 | I-4 | II-3 | 0.94 | 0.47 | 1.54 | No |
| Example 6 | I-5 | II-3 | 0.94 | 0.35 | 1.54 | No |
| Example 7 | I-1 | II-5 | 1.13 | 0.83 | 1.15 | No |
| Example 8 | I-1 | II-6 | 1.13 | 0.55 | 1.15 | No |
| Comparative example 5 | I-1 | II-4 | 0.94 | 0.20 | 0.77 | Yes |

**Table 8 Parameters and collision evaluation results of battery packs of Examples 9 to 17**

| Battery pack | First battery cell | Second battery cell | $\beta = r2/r1$ | N1 | N2 | $\Delta N$ | Collision evaluation Whether second battery cell has depression or electrolyte leakage | Energy density (as compared with only first battery cells arranged) Increase/equal/decrease |
|---|---|---|---|---|---|---|---|---|
| Example 9 | I-1 | II-1 | 0.94 | 6 | 1 | 5 | No | Increase |
| Example 10 | I-1 | II-1 | 0.94 | 5 | 1 | 4 | No | Increase |
| Example 11 | I-1 | II-1 | 0.94 | 3 | 1 | 2 | Yes | Increase |
| Example 12 | I-1 | II-5 | 1.13 | 6 | 1 | 5 | No | Increase |
| Example 13 | I-1 | II-5 | 1.13 | 5 | 1 | 4 | No | Increase |
| Example 14 | I-1 | II-5 | 1.13 | 3 | 1 | 2 | Yes | Increase |
| Example 15 | I-5 | II-7 | 0.75 | 4 | 1 | 3 | No | Increase |
| Example 16 | I-5 | II-7 | 0.75 | 3 | 1 | 2 | No | Increase |
| Example 17 | I-5 | II-7 | 0.75 | 5 | 1 | 4 | No | Decrease |

(IV) Comparison of test results of examples and comparative examples

It can be learned from the results shown in Table 5 that in Examples 1 to 8, the unit structures have a thermal stability factor $\mu = (D1 \times R1)/(D2 \times R2)$ satisfying $0.2 \leq \mu \leq 1$, without triggering thermal spread. However, in Comparative Examples 1 and 2, $\mu > 1$, and the unit structures have poor thermal stability, thermal runaway of the second battery cell in the central region is triggered. In addition, in Comparative Examples 3 and 4, although thermal spread is not triggered, the capacity surplus of the second battery cell is greater than 50%, resulting in uneven energy density distribution in the unit structure, which cannot increase the overall energy density of the battery pack.

In addition, in Examples 1 to 8, the second battery cell of Example 7 having the thermal stability factor $\mu = 0.83$ has peak temperature rise higher than 100°C. The second battery cells of Examples 1 to 6 and Example 8 having the thermal stability factor $\mu$ within a range of 0.2-0.8 have peak temperature rise lower than 100°C. Therefore, in terms of safety, the thermal stability factor $\mu$ is further selected to be 0.2-0.8.

In addition, it can be learned from the results shown in Table 6 that in Examples 1 to 8, when $1°C \leq T1 - T2 \leq 100°C$ and $0.01 \leq Q1/Q2 \leq 0.99$ are satisfied, and optionally, $1°C \leq T1 - T2 \leq 80°C$ and $0.01 \leq Q1/Q2 \leq 0.8$ are satisfied, thermal spread is not triggered. However, in Comparative Example 1, when T1-T2 = 0°C and Q1/Q2 = 1, thermal runaway of the second battery cell in the central region is triggered. In addition, in Examples 1 to 8, when $1°C \leq T3 - T4 \leq 100°C$ and $0.01 \leq Q3/Q4 \leq 0.99$, thermal spread is not triggered. However, in Comparative Examples 1 and 2, when $Q3/Q4 \geq 1$, thermal runaway of the second battery cell in the central region is triggered.

In addition, it can be learned from the results shown in Table 6 that in Examples 1 to 8, when the ratio $\alpha$ of the capacity C2 of the second battery cell to the capacity C1 of the first battery cell satisfies $1 \leq \alpha \leq 1.5$, and optionally, $1.05 \leq \alpha \leq 1.3$, thermal spread is not triggered, and that the capacity surplus of the second battery cell is lower than 25%. However, in Comparative Examples 1 and 2, when $\alpha < 1$, that is, the capacity C2 of the second battery cell is lower than the capacity C1 of the first battery cell, according to the cask effect, the energy of the first battery cell cannot be used efficiently after the electric energy of the second battery cell runs out. In addition, in Comparative Examples 3 and 4, $\alpha$ is excessively large, resulting in unusable excessive surplus capacity in the second battery cell, which cannot increase the overall energy density of the battery pack.

In addition, it can be learned from the results shown in Table 7 that in Examples 1 to 6 satisfying $\beta < 1$, the ratio $\delta$ of the extrusion force F2 of the second battery cell to the extrusion force F1 of the first battery cell satisfies $\delta > 1.5$, and that in Examples 7 and 8 satisfying $\beta > 1$, the ratio $\delta$ of the extrusion force F2 of the second battery cell to the extrusion force F1 of the first battery cell satisfies $1.01 \leq \delta < 1.5$. In examples 1 to 8, all the second battery cells have no depression or electrolyte leakage. However, in Comparative Example 5, when $\beta < 1$ and the ratio $\delta$ of the extrusion force F2 of the second battery cell to the extrusion force F1 of the first battery cell is less than 1, the second battery cell has depression or electrolyte leakage.

In addition, it can be learned from the results shown in Table 8 that in Examples 9, 10, 12, and 13, when the difference $\Delta N$ between N1 and N2 satisfies $\Delta N > 3$ and $\beta$ satisfies $0.8 < \beta \leq 2$, all the second battery cells in these examples have no depression or electrolyte leakage. In Examples 15 and 16, when $1 \leq \Delta N \leq 3$ and $\beta$ satisfies $0.1 \leq \beta \leq 0.8$, all the second battery cells in these examples have no depression or electrolyte leakage. However, in Examples 11 and 14, when $\beta > 0.8$ and $\Delta N = 2$, the second battery cells have depression or electrolyte leakage, meaning that the first battery cells provide insufficient protection for the second battery cells. In Example 17, when $\beta < 0.8$ and $\Delta N = 4$, as compared with the battery pack with only the first battery cells arranged, the energy density decreases instead. This is because when $\Delta N$ is 4, the first battery cells have a good surrounding effect on the second battery cells. In this case, the second battery cell may have a larger radius to implement a higher energy density.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Claims**

1. A battery pack, comprising:

   multiple battery cells arranged repeatedly in a unit structure, wherein
   the unit structure comprises N1 first battery cells and N2 second battery cells, the N1 first battery cells surrounding the N2 second battery cells, N1 and N2 being integers greater than or equal to 1, and N1 > N2; and
   given that the first battery cell has a volumetric energy density denoted as D1 and a direct current impedance denoted as R1, and
   that the second battery cell has a volumetric energy density denoted as D2 and a direct current impedance denoted as R2,
   the unit structure has a thermal stability factor $\mu = (D1 \times R1)/(D2 \times R2)$ satisfying $0.2 \leq \mu \leq 1$.

2. The battery pack according to claim 1, wherein

   given that a positive electrode plate of the first battery cell has an initial exothermic peak temperature denoted as T1 and a total heat release denoted as Q1, and
   that a positive electrode plate of the second battery cell has an initial exothermic peak temperature denoted as T2 and a total heat release denoted as Q2,
   the unit structure satisfies $1°C \leq T1 - T2 \leq 100°C$ and $0.01 \leq Q1/Q2 \leq 0.99$.

3. The battery pack according to claim 1 or 2, wherein

   given that a negative electrode plate of the first battery cell has an initial exothermic peak temperature denoted as T3 and a total heat release denoted as Q3, and
   that a negative electrode plate of the second battery cell has an initial exothermic peak temperature denoted as T4 and a total heat release denoted as Q4,
   the unit structure satisfies $1°C \leq T3 - T4 \leq 100°C$ and $0.01 \leq Q3/Q4 \leq 0.99$.

4. The battery pack according to any one of claims 1 to 3, wherein

given that the first battery cell has a capacity denoted as C1 and the second battery cell has a capacity denoted as C2,

a ratio $\alpha$ of the capacity C2 of the second battery cell to the capacity C1 of the first battery cell satisfies $1 \leq \alpha \leq 1.5$.

5. The battery pack according to claim 4, wherein $1.05 \leq \alpha \leq 1.30$.

6. The battery pack according to any one of claims 1 to 5, wherein

given that the first battery cell has an extrusion force denoted as F1 when the first battery cell deforms by 15%, the first battery cell has a radius denoted as r1, the second battery cell has an extrusion force denoted as F2 when the second battery cell deforms by 15%, the second battery cell has a radius denoted as r2, and a ratio of the radius r2 of the first battery cell to the radius r1 of the second battery cell is denoted as $\beta$,

when $0.1 \leq \beta \leq 1$, a ratio $\delta$ of the extrusion force F2 of the second battery cell to the extrusion force F1 of the first battery cell satisfies $1.5 \leq \delta \leq 2$; and

when $1 < \beta \leq 2$, $\delta$ satisfies $1.01 \leq \delta < 1.5$.

7. The battery pack according to any one of claims 1 to 6, wherein the first battery cell and the second battery cell are lithium-ion batteries, sodium-ion batteries, or potassium-ion batteries.

8. The battery pack according to any one of claims 1 to 7, wherein N1 = 4, and N2 = 1.

9. The battery pack according to any one of claims 1 to 8, wherein

given that a difference between N1 and N2 is denoted as $\Delta N$, when $1 \leq \Delta N \leq 3$, $\beta$ satisfies $0.1 \leq \beta \leq 0.8$; and when $\Delta N > 3$, $\beta$ satisfies $0.8 < \beta \leq 2$.

10. The battery pack according to any one of claims 1 to 9, wherein multiple unit structures are stacked along the vertical or horizontal direction.

11. An electric apparatus, comprising the battery pack according to any one of claims 1 to 10.

FIG. 1

FIG. 2

11 (12)

32

33

32

31

FIG. 3

1A

21

20

11

12

22

Z
Y
X

FIG. 4

11

12

FIG. 5

11

12

FIG. 6

FIG. 7

FIG. 8

EP 4 310 983 A1

FIG. 9

28

**INTERNATIONAL SEARCH REPORT**

| | |
|---|---|
| International application No. | **PCT/CN2022/119966** |

### A. CLASSIFICATION OF SUBJECT MATTER

H01M 10/42(2006.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 包, 组, 模块, 尺寸, 容量, 内阻, 不同, 混装, 混排, 热, 失控, 蔓延, batter+, cell?, pack?, module?, size, capacity, resistance, differ+, mixed, heat, thermorunaway, thermal, run, away, spread+

### C. DOCUMENTS CONSIDERED TO BE RELEVANT

| Category* | Citation of document, with indication, where appropriate, of the relevant passages | Relevant to claim No. |
|---|---|---|
| X | CN 208835163 U (ZHEJIANG DINGNENG ELECTRICAL CO., LTD.) 07 May 2019 (2019-05-07)<br>  description, paragraphs 4-11, and figures 1 and 2 | 1, 4, 7, 8, 10, 11 |
| A | CN 210350043 U (CHANGSHA YOULI ELECTRIC DRIVE SYSTEM CO., LTD.) 17 April 2020 (2020-04-17)<br>  entire document | 1-11 |
| A | CN 213150897 U (JIANGSU TAFEL NEW ENERGY TECH. CO., LTD. et al.) 07 May 2021 (2021-05-07)<br>  entire document | 1-11 |
| A | CN 212967833 U (SUNWODA ELECTRIC VEHICLE BATTERY CO., LTD.) 13 April 2021 (2021-04-13)<br>  entire document | 1-11 |
| A | CN 110311164 A (TIANJIN LISHEN BATTERY JOINT-STOCK CO., LTD.) 08 October 2019 (2019-10-08)<br>  entire document | 1-11 |
| A | US 2020381789 A1 (NIO USA INC.) 03 December 2020 (2020-12-03)<br>  entire document | 1-11 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search | Date of mailing of the international search report |
| **18 November 2022** | **25 November 2022** |
| Name and mailing address of the ISA/CN | Authorized officer |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/119966**

| Patent document cited in search report | | | Publication date (day/month/year) | Patent family member(s) | | | Publication date (day/month/year) |
|---|---|---|---|---|---|---|---|
| CN | 208835163 | U | 07 May 2019 | WO | 2020062527 | A1 | 02 April 2020 |
| CN | 210350043 | U | 17 April 2020 | | None | | |
| CN | 213150897 | U | 07 May 2021 | | None | | |
| CN | 212967833 | U | 13 April 2021 | | None | | |
| CN | 110311164 | A | 08 October 2019 | | None | | |
| US | 2020381789 | A1 | 03 December 2020 | | None | | |

Form PCT/ISA/210 (patent family annex) (January 2015)

**REFERENCES CITED IN THE DESCRIPTION**

**Patent documents cited in the description**

- CN 202111226418